# EUROPÄISCHE PATENTSCHRIFT

(11) **EP 0 686 904 B1**
(45) Veröffentlichungstag und Bekanntmachung des Hinweises auf die Patenterteilung: **13.08.1997**
(21) Anmeldenummer: 95108446.6
(22) Anmeldetag: 01.06.1995
(51) Int. Cl.: G05G 7/10, F16C 1/12, A01D 34/68

(54) **Rasenmäherschaltung**
Control device for lawn mower
Dispositif de commande pour tondeuse à gazon

(30) Priorität: 09.06.1994 DE 9409386 U
(43) Veröffentlichungstag der Anmeldung: 13.12.1995
(73) Patentinhaber: VIKING-UMWELTTECHNIK GESELLSCHAFT m.b.H., A-6330 Kufstein (AT)
(72) Erfinder: Stefanescu, Liviu, D-6330 Kufstein (DE)
(74) Vertreter: Wasmuth, Rolf, Dipl.-Ing.

(56) Entgegenhaltungen:
- US-A- 3 474 686
- US-A- 4 614 130

## Beschreibung

Die vorliegende Erfindung betrifft eine Rasenmäherschaltung, insbesondere für elektrische Mäher oder Benzinmäher, mit einem Rasenmäherholm und einem Bedienhebel, wobei der Bedienhebel mit einem Bowdenzug zur Schaltung eines Rasenmäherantriebs verbunden ist.

Derartige Rasenmäherschaltungen sind bekannt. Dabei wird die Rasenmäherschaltung über den Bedienhebel betätigt, wobei der Bedienhebel am oberen Ende des Rasenmäherholmes drehbar befestigt ist. Zum Betrieb des Rasenmähers muß der Bedienhebel ständig niedergedrückt werden. Insbesondere bei längerer Betätigung des Rasenmähers, z.B. bei der Bearbeitung größerer Rasenflächen, ist der Kraftaufwand und die Belastung für die Hand des Bedieners erheblich und unangenehm.

Zur Verringerung der Bedienkräfte werden gemäß dem Stand der Technik Schaltungen vorgeschlagen, die bei Betätigung und nach Einschalten des Rasenmäherantriebs einen vorbestimmten Krafttotpunkt überschreiten, so daß die vom Bediener aufzubringenden Haltekräfte nahezu Null sind. Um diesen Totpunkt zu überwinden, müssen jedoch vom Bediener des Rasenmähers weiterhin nicht unerhebliche Kräfte aufgebracht werden. Eine derartige Rasenmäherschaltung ist aus der US-A-4 614 130 bekannt.

Es ist daher Aufgabe vorliegender Erfindung, eine Rasenmäherschaltung gemäß dem Oberbegriff des Anspruches 1 bereitzustellen, der den vom Bediener aufzubringenden Kraftaufwand bei Betätigung des Rasenmähers weiter reduziert.

Diese Aufgabe wird durch die Gesamtheit der im unabhängigen Anspruch angegebenen Merkmale gelöst.

Eine erfindungsgemäße Rasenmäherschaltung, insbesondere für elektrische Mäher oder Benzinmäher, umfaßt einen Rasenmäherholm und einen Bedienhebel. Der Bedienhebel ist dabei bekannterweise mit einem Bowdenzug zur Schaltung eines Rasenmäherantriebs verbunden. Diese Verbindung wird erfindungsgemäß dadurch erreicht, daß der Bowdenzug über ein Rad nach dem Prinzip des Flaschenzugs geführt ist und das Rad über eine Federvorrichtung mit dem Bedienhebel verbunden ist. Dadurch ist vorteilhafterweise gewährleistet, daß die vom Bediener zum Einschalten des Rasenmäherantriebs bis zum Erreichen eines vorbestimmten Krafttotpunktes aufzubringenden Bedienkräfte um ca. 50 % halbiert werden.

Dieser Grundgedanke der Erfindung ist in vielfältiger Hinsicht vorteilhaft ausgestaltbar.

Im folgenden wird eine bevorzugte Ausführungsform der erfindungsgemäßen Rasenmäherschaltung beispielhaft anhand der beigefügten Zeichnungen näher erläutert. Darin zeigen
- Figur 1: eine schematisch dargestellte Seitenansicht der erfindungsgemäßen Rasenmäherschaltung und
- Figur 2: eine schematisch dargestellte Aufsicht auf die erfindungsgemäße Rasenmäherschaltung.

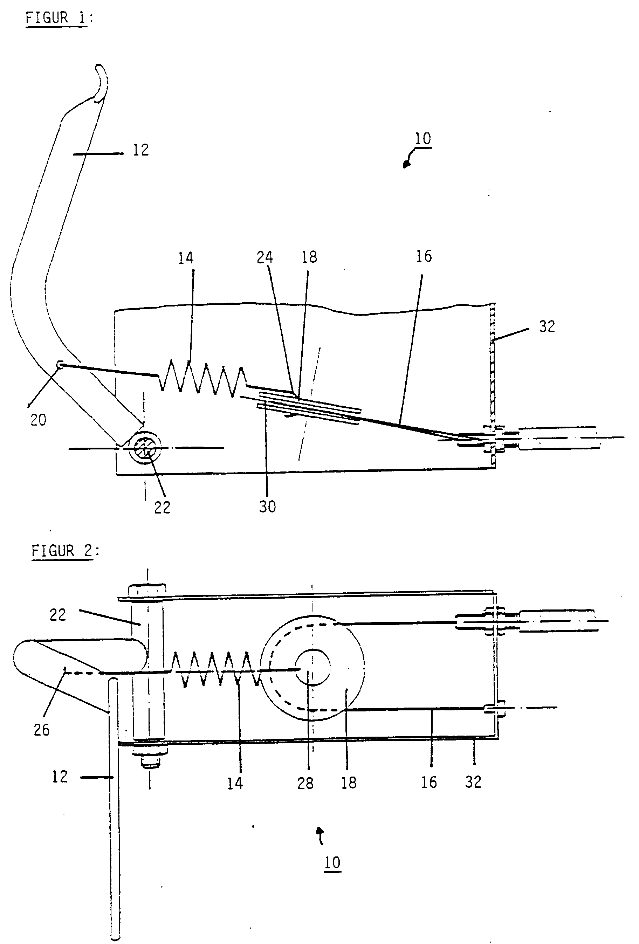

Eine in Figur 1 in einer schematischen Seitenansicht dargestellte Rasenmäherschaltung 10 umfaßt einen Rasenmäherholm (nicht dargestellt) und einen Bedienhebel 12. Der Bedienhebel 12 ist dabei drehbar über eine Schwenkachse 22 in einem Gehäuse 32 gelagert. Das Gehäuse 32 ist an dem Rasenmäherholm befestigt.

Über eine Federvorrichtung 14 und ein Rad 18 ist ein Bowdenzug 16, welcher zu einem Rasenmäherantrieb (nicht dargestellt) verläuft, mit dem Bedienhebel 12 verbunden. Die Federvorrichtung 14 greift dabei mit einem ersten hackenförmigen Ende 24 in eine Öffnung 28 des Rades 18. An dem dem ersten hackenförmigen Ende 24 gegenüberliegenden Ende greift ein zweites hackenförmiges Ende 22 der Federvorrichtung 14 in eine Öffnung 20 des Bedienhebels 12. Das Rad 18 weist eine an seinem Umfang verlaufende Nut 30 auf, in der der Bowdenzug 16 gelagert ist.

Die in dem Ausführungsbeispiel dargestellte Rasenmäherschaltung nützt somit das Prinzip des einfachen Flaschenzuges aus, wodurch bei Betätigung des Bedienhebels 12 die zur Betätigung des Bowdenzuges 16 aufzubringenden Kräfte ungefähr halbiert werden.

Figur 2 zeigt eine schematische Aufsicht auf die erfindungsgemäße Rasenmäherschaltung 10. Man erkennt deutlich die Wirkungsweise der erfindungsgemäßen Schaltung 10 nach dem Flaschenzugprinzip. Der gegen die Kraft des Bowdenzuges 16 aufzuwendende Druck wird durch dessen Führung in dem Rad 18 bzw. der Nut 30 des Rades 18 halbiert.

## Patentansprüche

1. Rasenmäherschaltung, insbesondere für elektrische Mäher oder Benzinmäher, mit einem Rasenmäherholm und einem Bedienhebel, wobei der Bedienhebel mit einem Bowdenzug zur Schaltung eines Rasenmäherantriebs verbunden ist,
**dadurch gekennzeichnet**,
daß der Bowdenzug (16) über ein Rad (18) nach dem Prinzip des Flaschenzugs geführt ist und das Rad (18) über eine Federvorrichtung (14) mit dem Bedienhebel (12) verbunden ist.

## Claims

1. Control device for lawn mowers, in particular for electric mowers or fuel driven mowers, comprising a handle for guiding the lawn mower and a control lever connected to a Bowden cable for activating the drive of the lawn mower,
characterized in that, on the principle of a pulley block, the Bowden cable (16) is passed around a pulley (18) and that the pulley (18) is connected to the control lever (12) via a spring device (14).

## Revendications

1. Dispositif de commande pour tondeuse à gazon, en particulier pour des tondeuses à gazon électriques ou à essence, comprenant un longeron de tondeuse à gazon et un levier de commande, ledit levier de commande étant rattaché à un câble Bowden pour la commande d'un entraînement de tondeuse à gazon,
**caractérisé en ce** que le câble Bowden (16) est passé sur une roue (18) d'après le principe du palan, et que la roue (18) est couplée avec le levier de commande (12) par l'intermédiaire d'un dispositif de ressort (14).
